# EUROPEAN PATENT APPLICATION

(11) **EP 1 627 826 A2**
(43) Date of publication of application: **22.02.2006**
(21) Application number: 05076914.0
(22) Date of filing: 18.08.2005
(51) Int. Cl.: B65D 81/34, A23L 1/39, A23L 3/10

(54) **Method for producing and packaging a heatable sauce in a container**

(30) Priority: 18.08.2004 EP 04077341
(71) Applicant: Remia C.V., 3734 BE Den Dolder (NL)
(72) Inventor: Stijlaart, Jaap, 3734 BE Den Dolder (NL); Eikelboom, Bart Jan, 3734 BE Den Dolder (NL)
(74) Representative: Winckels, Johannes Hubertus F.

(57) **Abstract**

The invention relates to a method for packaging a heatable sauce and a method for preparing said sauce.

According to the present invention there is provided a method for packaging a heatable sauce, comprising
- providing a microwavable plastic container with an elongated shape, said container comprising a bottom side, an enclosing side wall extending from the bottom side, and a substantially open top side;
- filling the container with the sauce; then
- sealing the open top side with a plastic seal;
- sterilising the sealed container with the sauce; then
- cooling the sterilised container with the sauce; and
- optionally applying a lid over the sealed top side.

The invention further provides a method of preparing a sauce, comprising, removing the seal of a package as defined herein, and thereafter heating the sauce in the container, using a microwave oven. Preferably the top side of the container is covered with the lid as defined herein, during the heating.

## Description

The invention relates to a method for packaging a heatable sauce and a method of preparing said sauce, as well as to packages that can be obtained by said method.

The average time spent by consumers for preparing hot meals has declined considerably in the last decade. Convenience in food preparing has become an important issue, as is illustrated by the popularity of microwave ovens in the preparation of full meals.

However, it has been found that the preparation of tasty warm sauces in microwaves is still a challenge. Warm sauces have a tendency to boil-over, unless the heating is carried out in a multi step heating process, with the requirement of manual stirring in between heating steps. Further, browning of the sauce due to excessive heating, which causes the Maillard reaction, is often observed. The Maillard reaction starts when a reducing sugar reacts with an amino compound to form N-substituted glycosylamines, giving off water:

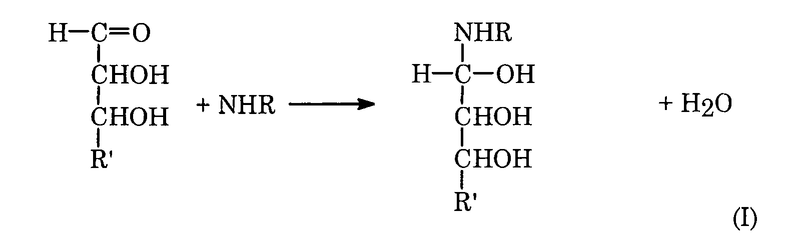

In addition, in sauces comprising garnish, *viz*. particles of considerable size (*e.g*. 1 mm or more), these particles tend to discolour and/or lose texture during storage.

Further, the inventors realised that for reasons of convenience it would be desirable to allow both heating of the sauce in a microwave oven and the serving of the warm sauce in the package in which it is sold, whilst maintaining good flavour, scent and storage properties. This combination of properties of container and content to make them suitable for microwaving is not readily feasible with existing packages.

From US-A-5 085 348 a reclosable container is known, typically for condensed milk or coffee creamer. Heatable sauces are not mentioned, nor the above-mentioned problems that arise when heating sauce in a microwave.

US-A-2003 0141218 describes a tray for heatable sauce. However, it does not teach a method for packaging a sauce resulting in a long shelf life.

From DE-A-44 42 709 a method for sterilising foodstuff is known. The foodstuff is packed in cans, glasses then sterilised and cooled in an autoclave system. No particular attention is given to heatable sauce.

GB-A-1 220 849 discloses a process for preparing sterilised or pasteurised coherent foodstuffs of thick and in particular stiff consistency. The above-mentioned problems are not addressed.

JP-A-2003 341 698 describes a plastic moulded container which can be heated in a microwave oven. The problems arising with heatable sauces are not discussed. In particular no mention is made of sterile food products.

JP-A-2004 083 073 describes a container for solid food products such as rice, no mention being made of sterile food products.

There remains a need for a packaging method of a heatable sauce, which does not have detrimental effects to the taste, smell, colour, shelf life, and texture.

It is an object of the present invention to provide a method for packaging a heatable sauce, which method overcomes one or more of the problems identified herein.

It has now been found possible to provide a method for packaging a heatable sauce resulting in a package that can be heated in the microwave and has a good shelf life, with a specific container and which package has been treated in a specific manner.

Accordingly the present invention relates to a method for packaging a heatable sauce, comprising
- providing a microwavable plastic container with an elongated shape, said container comprising a bottom side, an enclosing side wall extending from the bottom side, and a substantially open top side;
- filling the container with the sauce; then
- sealing the open top side with a plastic seal;
- sterilising the sealed container with the sauce; then
- cooling the sterilised container with the sauce; and
- optionally applying a lid over the sealed top side.

### BRIEF DESCRIPTION OF THE FIGURES

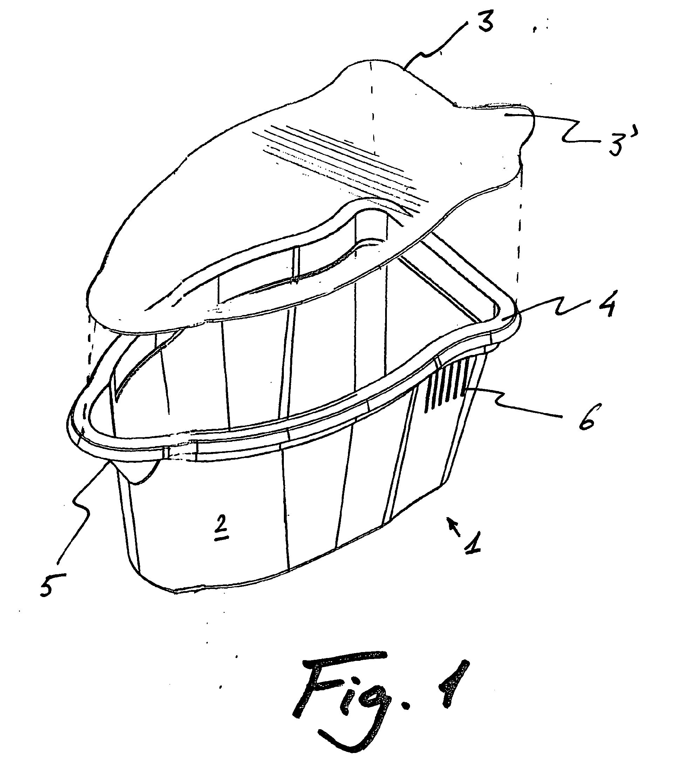

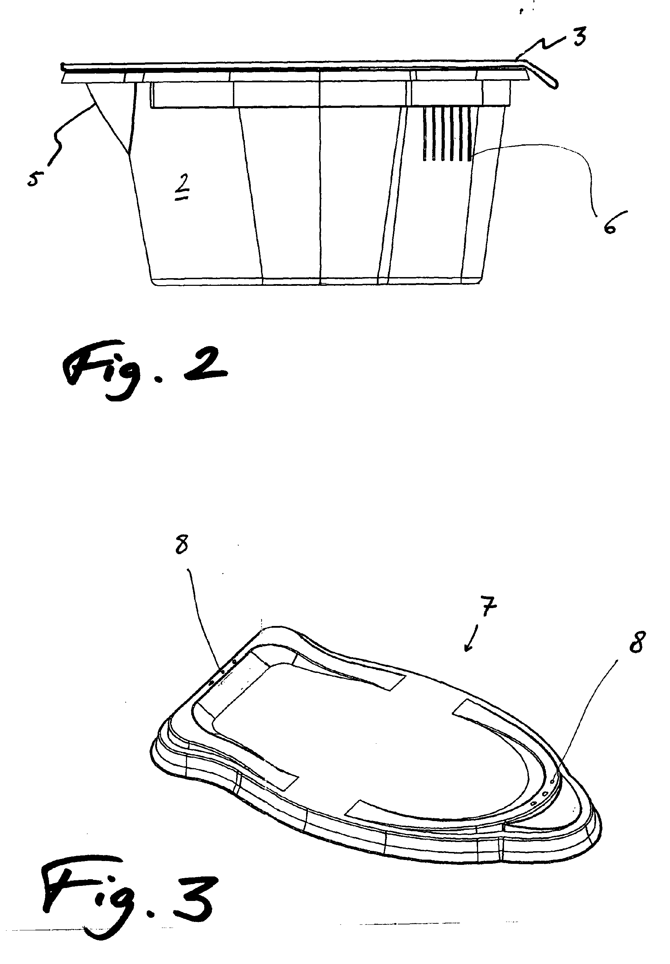

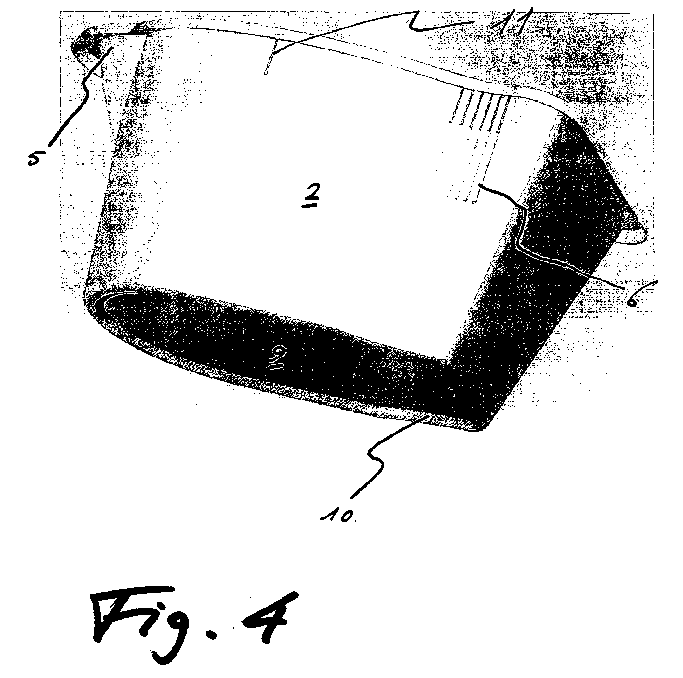

Fig. 1 is a schematic representation of a package in accordance with the present invention. Fig. 2 is a schematic side view of a package according to the present invention. Fig. 3 is a schematic representation of a lid for a package of the present invention. Fig. 4 shows schematically *inter alia* the bottom of the package according to the present invention.

It has been found that a package according to the invention is particularly suitable to store the sauce for a period of 6 months or more, such as from 6 to 18 months.

Within the context of the invention a sauce and container are in particular considered heatable to serving temperature in a microwave oven if the sauce inside the container can be heated to a temperature of at least 60 °C. More in particular, the sauce should remain a food-grade quality and the container should not deform to such an extent that its volume drops to a value below the volume of the sauce inside the container. Preferably, the container should substantially retain the shape it had before heating in the microwave.

When the terms "about", "essentially" and "substantially" are used herein, this is at least meant to include a deviation of up to 10 %, in particular of up to 5 %, more in particular of up to 2 %.

The term "essentially free" is used to describe that no traceable amount (as detectable by conventional means at the filing date) or only a minor amount of a particular component is present in the composition. In particular this term is used to indicate an amount of less than 0.5 wt.%, more in particular an amount of less than 0.1 wt.% of the component of which the composition is essentially free.

The term bottom side is used herein to describe the side that would normally be horizontally at the underside of the container when put at rest on a horizontal surface, such that it prevents the sauce from flowing out of the container, also if the top side is not provided with a seal or other closure. Other terms indicating a direction, such as top, vertical or horizontal are to be understood as relative to the bottom side.

The term sterilised is in particular used herein to indicate that the contents of the container (the sauce) have been treated to achieve an Fo value of at least 3, preferably at least 5. The concept of F₀ value is generally known in the art and *e.g*. described in ECFF Guide 6 (21 April 1993). In particular a value of 3, provides effective killing of Clostridium Botulinium. A value of 5 indicates that a product can be stored at up to 20 °C and remains consumable for at least about 3 days after opening (and proper treatment) and subsequent cooling in a fridge (at about 4 °C).

The term "sauce" is defined herein as a pourable food product. Typically, a sauce is served with food to improve its taste. In the context of the invention, a sauce is intended to be served warm, and thus maintains or gets a desired appearance at a temperature of at least about 60 °C.

Usually a sauce is based upon water and at least one food ingredient selected from oils and fats, pastes of a plant material such as tomato paste, a starch, (dried) milk constituents, egg constituents (*e.g.* egg yolk, flavouring agent (salt, herbs, spices, aroma, glucose syrup, broth), particles formed of plant material (*e.g*. mushrooms, carrots, peppers, tomatoes or other vegetable *etc*.), emulsifier, thickening agent and the like.

In principle, the method of the present invention comprises a purely vegetable based sauce, but the addition of non-vegetable or a non-vegetable based ingredients is not excluded. Tasty sauce has been prepared though in the absence thereof.

Suitable sauces which can be present in a package according to the invention include sauces comprising an oil-in-water emulsion (optionally with added solids, such as food chunks). Preferred examples thereof are pepper sauce, vegetable sauce, mushroom sauce, curry sauce, cheese sauce, stroganoff sauce and satay sauce (an oriental style peanut butter based sauce).

Another suitable sauce is a sauce based upon tomato paste, such as pasta sauce.

Surprisingly, it is according to the present invention not necessary to add preserving agent in order to maintain a good shelf life. Accordingly there is no need to acidify the sauce. Thus a sauce according to the invention may suitably be mildly acidic (as is the case for tomato based sauce due to the acidic nature of tomato paste) to neutral. In particular the pH is preferably in the range of about 5.2 to 7, thus providing a mild product.

In particular for a sauce comprising a oil/water emulsion the pH more preferably is about 6.0 to 6.7. It is surprising that these sauces, which are nearly neutral in pH can still be provided with such a long shelf life in accordance with the present invention. According to the present inventors' best knowledge, these types of long shelf life sauces, which are ready to use in a microwave are not commercially available. Consequently, in a further aspect the present invention is directed to a sterile sauce having a pH of from 6.0 to 6.7.

The sterilising preferably takes place while rotating the filled container. This also avoids undesired gel forming. Particularly suitable is a rotating speed of at least about 4 rotations per minute, *e.g*. about 5-6 rpm. Rotation has been found very advantageous for maintaining a good quality and avoiding browning of the sauce, especially when a container with a spout is used.

The sterilising preferably takes place by heating, in particular in an autoclave. Very good results have *inter alia* been achieved with a sterilisation at about 110-120 °C and/or for a duration of 15 minutes to 2.5 hours. Preferably the sterilisation is carried out at about 117 °C during 1 hour, or under equivalent conditions.

Other means of sterilisation processes are also possible within the scope of the present invention, for instance by providing a stream of sterilised sauce and filling the containers with the sterilised sauce.

As a plastic for the container material, in principle any food grade plastic may be used that is sufficiently stable under sterilising conditions and when heated with the sauce in a microwave oven.

It was found that a thermoplastic polymer, in particular a polyolefin, having a melting point of 130 °C or more, *e.g*. up to 170 °C is particularly suitable.

Good results have been achieved with such a polymer having a density of 0.9-1.0 g/cc and a bulk density of 0.5-0.6 g/cc.

Very good results have been achieved with a polypropylene copolymer, in particular a block copolymer.

It is preferred that the container used in the method of the invention is made of a single compound. This enables easy recyclability of the container. The plastic seal will generally comprise more than one compound.

As described above, a container used in the method of the invention is made of plastic and comprises:
- a bottom side;
- extending from the bottom side, an enclosing side wall; and
- a substantially open top side, provided with a plastic seal, which covers the open top side.

Further one or more of the following features are usually present.

The container has an elongated shape. The term "elongated shape" is used to describe a shape in which the container has a cross-section parallel to the bottom side, which cross-section is considerably longer (*e.g*. by a factor of 1.5 or more, *e.g.* 2 or more, typically up to 4 or 6; preferably around 2.5) than the width of said cross-section. Such an elongated shape results in a relatively high container surface to volume ratio, compared to an essentially spherical or cubic shape. It has been found that this is of advantage to the sensoric appreciation of the sauce after preparation. Without being bound by theory, it is thought that this is due to heating effects during sterilisation and/or preparation in the microwave.

It has further been found that the centre distance of the container (*viz*. the shortest distance of the centre of the container to the wall) plays a role in the product quality, in particular for the sensoric appreciation of warm sauce. In addition, the centre distance has been found to be of considerable importance to the sterilising behaviour, thus affecting shelf life and also taste. Good results have been achieved with a package wherein the centre distance of the container is less than about 2.5 cm, in particular less than about 2.25 cm. If the centre distance is more than 2.5 cm, it becomes more difficult to obtain a homogeneously sterilised product and also a homogeneously heated hot sauce.

Preferably, the end opposite to the bottom side of the container is provided with an edge for attaching the seal, preferably having a width of at least about 2 mm.

For convenience in use, it is advantageous to provide the container with a spout. This allows easy serving directly form the container. Preferably, the container comprises a pouring spout extending to the top side of the container, said spout having a pour opening in the plane of the topside of the container. More preferably it is present at one of the short ends of a container with an elongate shape.

For improving the shape stability of the container during heating (either in the microwave oven or during sterilisation), it is preferred to provide the side wall with reinforcing protuberances, in particular reinforcing ribs. Such ribs can be present at the inner or outer surface of the side wall, *e.g*. in the form of essentially vertical strips. Such may advantageously be provided as an integral part of the container.

For convenience, an outer surface of the side wall is provided with a gripping aid, in particular gripping ribs, said gripping aids preferably being positioned in the upper half of the side wall. More preferably to sets of grips are positioned opposite to each other at the opposite elongate part of the side walls. When a spout is present, such grips are preferably placed remote from the spout.

The container is preferably a moulded container, *e.g*. formed by injection moulding. If provided with a label, the label is preferably applied by In Mould Labelled labelling. This has been found particularly advantageous with respect to the sterilisation, in particular when sterilising under humid conditions, *e.g.* in an autoclave. The label is preferably printed with UV ink.

In particular when a label is present at the outer surface of the bottom side, it has been found advantageous to provide the outer surface of the bottom side with a raised rim. Thus the label can be prevented from deterioration when moving the bottom side over a surface.

The plastic seal preferably comprises a lip for tearing off the seal. The seal should also be suitable for sterilisation, and may *e.g*. have the properties as described for the container with respect to melting temperature. Particular suitable are (laminates comprising) polypropylene (co-)polymers, in particular a laminated structure comprising cast polypropylene and nylon. Such seals are commercially available.

It is further advantageous to provide the container with a plastic lid covering the topside and the seal. Thus, the seal is protected. Further this lid can advantageously be used during heating in the microwave, to prevent excessive loss of fluids from the sauce. In particular, the lid may be made of any food grade plastic that is sufficiently stable when heated with the sauce, *e.g*. a polymer such as described for the container generally suffices. Suitable materials for the lid are known in the art, *e.g*. pealable, cast polyolefins. It is generally not necessary that the material can be sterilised.

The invention further relates to a package obtainable by a method according to the invention comprising a sealed container with sauce.The invention further relates to a method of preparing a sauce, comprising, removing the seal of a package as defined herein, and thereafter heating the sauce in the container, using a microwave oven. Preferably the top side of the container is covered with the lid as defined herein, during the heating.

Since the sauce can be heated in the microwave inside the container, its preparation is very convenient. Moreover in contrast to glass or earthenware, the material of which the container (plastic) is found to allow touching the container shortly after heating, without causing burns or the like.

In view of the use of the lid in the microwave oven, the lid preferably comprises vent holes. In case the container (and thus the lid) is elongate, these vent holes may suitably be placed near the short ends of the lid. The vent holes allow a controlled release of steam from the sauce while heating.

For ease of stapling it has been found advantageous to provide the upper surface of the lid with a raised rim fit to confine the bottom side of the container.

It has further been found that that sensoric appreciation (taste, texture and smell) of a sauce heated by a microwave in a container in accordance with the invention is good.

Accordingly, the invention also relates to a sauce obtainable by the preparation method as set out above.

It has been found that in accordance with the invention, relatively large food particles such as (parts) of mushrooms and/or other vegetables, can be present in the sauce, whilst maintaining good heating throughout the sauce and maintaining good sensoric properties. In particular particles may be present having a diameter, as determined by the enveloping circle, of at least 4 mm, more in particular of at least 1 cm, up to 2 cm or even more, may be present.

It has further been found that improved taste is achieved (after heating in a microwave oven) when a considerable amount of the fat (lipid) present in the sauce is a solid fat, *i*.*e*. a fat that is solid at 20 °C (and atmospheric pressure), instead of liquid oil, which is conventionally used to prepare warm sauces. Preferably such fat is of plant origin, such as palm oil or coconut oil. Preferably at least 50 wt.% of the lipid content is formed by one or more solid fats, more preferably about 90-100 wt.% of the lipid content is solid fat, in particular palm oil.

The total lipid content is preferably up to about 15 wt.%, more preferably up to about 7.5 wt.%. The lower limit depends upon the nature of the application. For instance a sauce based upon tomato paste, such as pasta sauce usually comprises hardly any added fat, if any at all. For sauces comprising an oil/water emulsion, the lipid content is preferably at least about 5 wt.%.

Fig. 1 is a schematic representation of a package (1) in accordance with the present invention. In particular, this figure shows the container having an enclosing side wall (2) and a plastic foil, which serves as a seal (3) and which is brought into place at edge or rim (4), as indicated by the dashed lines in Fig. 1, thus sealing the package. The foil (3) for the seal is preferably made from transparent or translucent plastic, preferably based on polyolefins, more preferably polypropylene. Preferably the polypropylene or other foil exhibits a small amount of shrink when brought at sterilising temperatures (*e.g*. at 117 °C), since this provides for the effect that the foil forms a concave surface after sterilisation and cooling, which provides for a good check that the package is maintained vacuum and sterile during transport and storage. The plastic seal may comprise a portion 3', which is a lip that assists in opening the package by tearing the foil from the edge (4) thus opening the seal. Preferably the lip (3') is provided on the left hand side of the package (as seen from the backside of the container as shown in Fig. 1), since this facilitates opening of the package by a user by holding the package at rims (6) using the thumb and index finger of the left hand and pulling at lip (3') using the right hand. It was found that this manner of opening the package is preferred by the majority of right-handed users, which form the majority of all consumers. The package of Fig. 1 is provided with gripping ribs (6), which ribs assist in getting a firm grip on the package by the user, typically by using thumb and index finger, and at the same time provide for a cooling effect so as to avoid subjecting the user's skin to temperatures that are too high. The edge (4) at which the foil (3) is applied to form the seal, should be wide enough to ensure that the package withstands the sterilising (autoclaving) conditions and that the contents of the package maintains sterile after the sterilisation and cooling step. For this reason it is preferred that the width of edge (4) is at least 2 mm, more preferably at least 2.5 mm, in particular between 3 and 4 mm. The package is further provided with a pouring spout (5), which assists in pouring the sauce after heating when it is ready for use.

Fig. 2 is a schematic side view. By way of example, typically the container measures 5.8 cm × 12.7 cm × 7.2 cm (height × length × width). At these dimensions it is still possible to obtain a core temperature that is sufficiently high to sterilise the sauce. A suitable filling volume for these dimensions is approximately 200 ml. This is also a desirable amount from a consumer's point of view. Packages of these dimensions are in addition suitable for pellet-stacking in a collomodule environment.

Fig. 3 schematically shows a lid (7) that can be used to apply on the container to form the package of the present invention. The lid may be applied to the container after the sterilising process. The lid (7) is preferably made from a non-transparent plastic, which may be given a colour to provide a desirable appeal on the product. During transport to the outlet point, *e.g*. shops, as well as when placed on the shelves in the shops, the lid enables stacking of two or more packages and protects the seal from being damaged. A further function of the lid is when the package is opened by the user by removing the seal (3) prior to heating the sauce in the microwave. It was found that the heating process is improved considerably when the lid (7) is provided with one or more venting holes (8). Preferably a multitude of holes, such as 4 to 10, *e.g.* 6, is present, which holes may be more or less evenly distributed over the surface of the lid. The diameter of each of the holes is preferably from 1 to 3 mm, more preferably approximately 2 mm. The total area of the holes for a 5.8 cm × 12.7 cm × 7.2 cm package, is preferably approximately between 10 and 30 mm², more preferably about 20 mm². This on the one hand ensures that no excessive pressure is built up during the microwave heating process and on the other hand avoids that too much water evaporates from the sauce during the microwave heating process.

Fig. 4 shows schematically the bottom and the side wall of a package in accordance with the present invention. In this particular embodiment the bottom (9) is provided with a protruding rim (10), which typically has a height of approximately 0.5 to 2 mm, *e.g.* about 1 mm. This rim (10) provides for the advantage that the printed bottom (9), which may *e.g.* bear the barcode of the package product of the present invention, is protected from wear. This is important, because damaged barcodes may result in scan failure during check out *e.g*. at the supermarket, which can be economically very disadvantageous. Also in Fig. 4 reinforcing rims (11) are indicated, which may be present on the inside and/or outside of the enclosing side wall (2). These reinforcing rims (11) may serve to provide extra mechanical stability to the container.

### EXAMPLES

### Base mixture

A mixture was made of water to which was added native starch, modified starch, sugar, glucose syrup and vegetable fat, which was stirred so as to obtain a homogeneous mixture.

To this were added herbs, spices, aroma and colorant in suitable amounts.

The mixture thus obtained was mixed and heated. Garnish (vegetables) were added.

From the mixture thus obtained a sauce was made by adding hydrocolloids and subsequent mixing. The sauce was heated while continuously stirring. The sauce was then transferred to a stirred buffer tank.

The sauce was subsequently filled in accordance with the invention in a container that was made from a microwavable plastic material. Next the open top side of the container was sealed with a plastic seal. The sealed, filled container was subsequently sterilised.

After storage for three months, the filled, sealed container was placed in a microwave, after the seal had been provided with four punctures. The sauce was thus heated for 2 min at 800 W.

The heated sauce had excellent taste and texture.

## Claims

1. Method for producing and packaging a heatable sauce, comprising
- providing a microwavable plastic container with an elongated shape, said container comprising a bottom side, an enclosing side wall extending from the bottom side, and a substantially open top side;
- filling the container with the sauce; then
- sealing the open top side with a plastic seal;
- sterilising the sealed container with the sauce; then
- cooling the sterilised container with the sauce; and
- optionally applying a lid over the sealed top side.

2. Method according to claim 1, wherein the sauce is essentially free of added preserving agents.

3. Method according to any of the preceding claims, wherein the sauce comprises garnish, preferably with a diameter, as determined by the enveloping circle, of at least 4 mm, more preferably at least 6 mm.

4. Method according to any of the preceding claims, wherein the sauce is an emulsion of lipid and water.

5. Method according to any of the preceding claims, wherein at least 50 wt.% of the lipid content of the sauce, preferably substantially all the lipid content, is formed by one or more lipids that are solid at 20 °C.

6. Method according to any of the preceding claims, wherein the container with the sauce has been sterilised to an F₀ value of at least 3, preferably at least 5.

7. Method according to any of the preceding claims, wherein the sterilising takes place while rotating the container.

8. Method according to any of the preceding claims, wherein the sterilising takes place in an autoclave.

9. Method according to any of the preceding claims, wherein the container comprises a pouring spout extending to the top side of the container, said spout having a pour opening in the plane of the topside of the container.

10. Method according to any of the preceding claims, wherein the end opposite to the bottom side of said container is provided with an edge for attaching the seal, preferably having a width of at least about 2 mm.

11. Method according to any of the preceding claims, wherein the centre distance of said container is less than about 2.5 cm, preferably less than about 2.25 cm.

12. Method according to any of the preceding claims, wherein the side wall of the container is provided with reinforcing protuberances, in particular reinforcing ribs.

13. Method according to any of the preceding claims, wherein the outer surface of the side wall of the container is provided with a gripping aid, in particular gripping ribs, said gripping aids preferably being positioned in the upper half of the side wall, more preferably at the elongate part of the side walls.

14. Method according to any of the preceding claims, wherein the outer surface of the container comprises an In Mould Labelled label.

15. Method according to any of the preceding claims, wherein the outer surface of the bottom side of the container comprises a raised rim.

16. Method according to any of the preceding claims, wherein the plastic seal comprises a lip for tearing off the seal.

17. Method according to any of the preceding claims, wherein the lid comprises vent holes.

18. Method according to any of the preceding claims, wherein the upper surface of the lid comprises a raised rim fit to confine the bottom side of the container.

19. Package obtainable by any of the preceding methods comprising a sealed container with sauce.

20. Method of preparing a sauce, comprising, removing the plastic seal of a package prepared by a method of any of the preceding claims, and thereafter heating the sauce in the container, using a microwave oven.

21. Method according to claim 20, wherein the top side of the container is covered with a plastic lid during the heating.

22. Sauce obtainable by a method according claims 20 or 21.
